# FASCICULE DE BREVET EUROPEEN

(11) **EP 3 390 103 B1**
(45) Date de publication et mention de la délivrance du brevet: **18.11.2020**
(21) Numéro de dépôt: 16825504.0
(22) Date de dépôt: 14.12.2016
(51) Int. Cl.: B60C 9/20, B60C 11/12, B60C 11/03, B60C 9/18, B60C 9/22

(54) **PNEUMATIQUE PRESENTANT DES PROPRIETES D'USURE ET DE RESISTANCE AU ROULEMENT AMELIOREES**
REIFEN MIT VERBESSERTEN ABNUTZUNGSEIGENSCHAFTEN UND VERBESSERTEM ROLLWIDERSTAND
TIRE HAVING IMPROVED WEAR PROPERTIES AND IMPROVED ROLLING RESISTANCE

(30) Priorité: 16.12.2015 FR 1562449
(43) Date de publication de la demande: 24.10.2018
(73) Titulaire: Compagnie Générale des Etablissements Michelin, 63000 Clermont-Ferrand (FR)
(72) Inventeur: GERVAIS, Philippe, 63040 Clermont-Ferrand Cedex 9 (FR); GODEAU, Gilles, 63040 Clermont-Ferrand Cedex 9 (FR); QUANTINET, Benjamin, 63040 Clermont-Ferrand Cedex 9 (FR); ZIVKOVIC, Tony, 63040 Clermont-Ferrand Cedex 9 (FR)
(74) Mandataire: Le Cam, Stéphane Georges Elie
(86) Numéro de dépôt international: PCT/FR2016/053406
(87) Numéro de publication internationale: WO 2017/103462

(56) Documents cités:
- WO-A1-2013/083340
- WO-A1-2013/150143
- WO-A1-2014/102136
- FR-A1- 2 926 037
- FR-A1- 2 950 565

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Il est notamment connu d'introduire une couche de mélange caoutchouteux entre les extrémités des couches de travail pour créer un découplage entre lesdites extrémités pour limiter les contraintes de cisaillement. De telles couches de découplage doivent toutefois présenter une très bonne cohésion. De telles couches de mélanges caoutchouteux sont par exemple décrites dans la demande de brevet WO 2004/076204.

Les pneumatiques ainsi réalisés permettent effectivement d'améliorer les performances notamment en termes d'endurance.

Par ailleurs, il est connu pour réaliser des pneumatiques à bande de roulement très large ou bien pour conférer à des pneumatiques d'une dimension donnée des capacités de charges plus importantes d'introduire une couche d'éléments de renforcement circonférentiels. La demande de brevet WO 99/24269 décrit par exemple la présence d'une telle couche d'éléments de renforcement circonférentiels.

La couche d'éléments de renforcement circonférentiels est usuellement constituée par au moins un câble métallique enroulé pour former une spire dont l'angle de pose par rapport à la direction circonférentielle est inférieur à 2.5°.

Le document WO 2013/083340 décrit encore un pneumatique comportant une couche d'éléments de renforcement circonférentiels associée à deux couches de travail.

En combinaison avec cette structure interne de pneu, il est connu de pourvoir la bande de roulement, c'est-à-dire la partie du pneu destinée à venir en contact avec le sol lors du roulage et à s'user lors du roulage, d'une sculpture formée d'éléments de relief délimités par des rainures qu'elles soient d'orientation circonférentielle, transversale ou oblique. L'objectif d'une telle sculpture est de conférer à la bande de roulement de bonnes performances en roulage sur chaussée sèche et sur chaussée revêtue d'eau notamment par temps de pluie.

Pour améliorer les performances des bandes de roulement sans toutefois trop abaisser les rigidités de cisaillement desdites bandes, il est connu de former sur la surface de roulement une pluralité d'arêtes orientées transversalement ou en oblique afin de couper la pellicule d'eau sur une chaussée pour assurer un bon contact entre la bande de roulement et la chaussée. Un moyen d'obtention de telles arêtes consiste à pourvoir la bande avec une pluralité de découpures, ces découpures ayant la forme de rainures ou la forme d'incisions. On distingue, dans la présente demande, les incisions des rainures en ce que les incisions ont une largeur appropriée pour permettre pendant le roulage un contact au moins partiel entre les parois en vis-à-vis délimitant ces incisions et notamment au cours du passage dans le contact avec le sol, ce qui ne saurait être le cas pour les rainures dans les conditions normales d'usage du pneu.

Combiné à ce besoin d'améliorer la performance d'adhérence par la présence d'arêtes formées par les découpures transversales, il est également requis que les performances d'une bande de roulement soient pérennes, c'est-à-dire que des performances satisfaisantes soient atteintes même après une usure partielle plus ou moins avancée. Par usure partielle d'une bande de roulement, on entend un état d'usure correspondant à une épaisseur de bande de roulement au plus égale à l'épaisseur totale de bande pouvant être usée avant de devoir changer le pneu notamment pour des raisons de réglementation.

La demande de brevet WO 02/38399-A2 décrit une bande de roulement pour pneu de véhicule poids lourd, cette bande de roulement comprenant une pluralité de rainures circonférentielles et transversales. Les rainures transversales sont formées d'une alternance de zones en creux et d'incisions de façon à avoir un volume de creux s'ouvrant sur la surface de roulement à l'état neuf et un volume de creux cachés, ces creux cachés étant destinés à s'ouvrir après une usure partielle de la même bande de roulement. La présence de creux cachés - apparaissant avec l'usure, permet d'avoir une plus grande rigidité à l'état initial tout en assurant une performance d'adhérence quel que soit le niveau d'usure de la bande.

Les documents WO 2013/150143, FR 2 950 565, WO 2014/102136 et FR 2 926 037 décrivent par exemples des découpures d'orientation oblique dont la largeur à la surface de la bande de roulement est inférieure à celle au fond de la découpure.

Lors d'essais, les inventeurs ont mis en évidence que la présence de certains types de découpures obliques comportant des creux cachés pouvait conduire à une dégradation des performances en termes d'usure, avec l'apparition de formes d'usures irrégulières selon la direction transversale et/ou longitudinale selon l'angle formé entre les découpures obliques et la direction circonférentielle, en comparaison de pneumatiques similaires ne comportant pas de tels creux cachés pour des usages identiques.

Par ailleurs, les exigences actuelles orientent la conception des pneumatiques de sorte que ceux-ci participent à la diminution de la consommation de carburant des véhicules.

Un but de l'invention est de fournir des pneumatiques dont les propriétés d'usure et plus spécifiquement de régularité d'usure selon la direction transversale et/ou longitudinale sont conservées ou améliorées quel que soit l'usage, pour ces types de découpures obliques comportant des creux cachés présents sur la bande de roulement et dont les performances en termes de résistance au roulement sont améliorées pour contribuer à une moindre consommation de carburant par les véhicules équipés de tels pneumatiques.

Ce but est atteint selon l'invention par un pneumatique à armature de carcasse radiale comprenant une armature de sommet formée d'au moins deux couches de sommet de travail d'éléments de renforcement, une couche C de mélange caoutchouteux étant disposée entre au moins les extrémités desdites au moins deux couches de sommet de travail, ladite armature de sommet étant coiffée radialement d'une bande de roulement, ladite bande de roulement étant réunie à deux bourrelets par l'intermédiaire de deux flancs, l'armature de sommet comportant au moins une couche d'éléments de renforcement circonférentiels, ladite bande de roulement comportant une surface de roulement destinée à venir en contact avec une chaussée et former une surface de contact, ladite bande de roulement étant constituée d'au moins une partie centrale s'étendant au moins dans la zone du plan équatorial et deux parties axialement extérieures et présentant au moins dans ladite partie centrale au moins une découpure d'orientation oblique, la profondeur, mesurée sur pneumatique neuf dans au moins ladite partie centrale, de ladite au moins une découpure d'orientation oblique étant supérieure ou égale à 40 % de l'épaisseur de la bande roulement, le ratio de la largeur mesurée au fond de ladite au moins une découpure d'orientation oblique sur la largeur mesurée en surface de la bande de roulement sur pneumatique neuf de ladite au moins une découpure d'orientation oblique étant supérieur à 1.2, le module d'élasticité sous tension à 10 % d'allongement de la couche C étant supérieur à 9 MPa et la valeur maximale de tan(δ), noté tan(δ)ₘₐₓ, de la couche C étant inférieure à 0.100.

Au sens de l'invention, une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Au sens de l'invention, une découpure d'orientation oblique est une découpure dont le plan moyen d'au moins une partie des parois de ladite découpure forme un angle avec un plan radial compris entre 35° et 80°. Cet angle formé avec un plan radial peut être orienté dans un sens ou dans l'autre par rapport audit plan radial. Une découpure d'orientation oblique peut encore être une découpure qui chemine continument de part et d'autre d'un plan moyen tel qu'il vient d'être décrit ; il peut encore s'agir d'une découpure dont les parois ondulent ou zigzaguent autour d'un plan moyen tel qu'il vient d'être décrit.

Au sens de l'invention, la profondeur d'une découpure est la distance radiale mesurée sur un pneumatique neuf entre la surface de la bande de roulement et le point radialement le plus intérieur de ladite découpure.

Au sens de l'invention, l'épaisseur de la bande roulement, mesurée dans une coupe radiale du pneumatique, est la distance mesurée sur pneumatique neuf entre un point de la surface de la bande de roulement et la projection orthogonale dudit point sur la surface radialement extérieure de l'armature de sommet.

La largeur entre les parois d'une découpure est mesurée sur pneumatique neuf, dans un plan de coupe perpendiculaire au plan moyen des parois et au plan tangent à la surface de la bande de roulement. Elle est mesurée selon une direction parallèle au plan tangent à la surface de la bande de roulement.

Au sens de l'invention, la largeur entre les parois d'une découpure en surface de la bande de roulement correspond à la mesure la plus petite dans la partie radialement extérieure de la découpure et plus exactement à la mesure la plus petite réalisée dans une zone comprise radialement entre un point radialement le plus extérieur de ladite découpure et un point situé à une distance de la surface de la bande de roulement égale à 30 % de la profondeur de ladite découpure.

Au sens de l'invention, une mesure au fond d'une découpure correspond à la mesure la plus grande dans la partie radialement intérieure de la découpure et plus exactement à la mesure la plus grande réalisée dans une zone comprise radialement entre le point radialement le plus intérieur de ladite découpure et un point située à une distance de la surface de la bande de roulement égale à 25% de la profondeur de ladite découpure.

La partie centrale de la bande de roulement s'étendant au moins dans la zone du plan équatorial présente avantageusement selon l'invention une largeur axiale au moins aussi grande que celle de la couche d'éléments de renforcement circonférentiels.

Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 2 mm d'épaisseur et de 78 mm² de section), soumis à une sollicitation sinusoïdale en cisaillement simple alterné, à la fréquence de 10Hz, à une température de 100°C. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan(δ) mesuré sur le cycle retour. Pour le cycle retour, on indique la valeur maximale de tan(δ) observée, noté tan(δ)ₘₐₓ.

La résistance au roulement est la résistance qui apparaît lorsque le pneumatique roule. Elle est représentée par les pertes hystérétiques liées à la déformation du pneumatique durant une révolution. Les valeurs de fréquence liées à la révolution du pneumatique correspondent à des valeurs de tan(δ) mesurée entre 30 et 100°C. La valeur de tan(δ) à 100 °C correspond ainsi à un indicateur de la résistance au roulement du pneumatique en roulage.

Il est encore possible d'estimer la résistance au roulement par la mesure des pertes d'énergie par rebond des échantillons à énergie imposée à des températures de 60 °C et exprimées en pourcentage.

Avantageusement selon l'invention, la perte à 60 °C, notée P60, de la dite au moins une couche de calandrage d'au moins une couche de sommet de travail est inférieure à 20 %.

La couche C de mélange caoutchouteux permet d'obtenir un découplage desdites couches de sommet de travail afin de répartir les contraintes de cisaillement sur une plus grande épaisseur.

Au sens de l'invention des couches couplées sont des couches dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

Les essais réalisés ont montré que l'utilisation de mélanges constituant la couche C dont les modules d'élasticité sont supérieurs à 9 MPa et dont la valeur tan(δ)ₘₐₓ est inférieure à 0.100 permet d'améliorer les propriétés du pneumatique en matière de résistance au roulement en conservant des propriétés d'endurance satisfaisante.

Les conceptions de pneumatiques plus usuelles prévoient des couches de mélange caoutchouteux disposées entre les extrémités des couches de sommet de travail avec des modules d'élasticité sous tension à 10 % d'allongement sensiblement équivalents mais avec des valeurs maximales de tan(δ), noté tan(δ)ₘₐₓ, supérieures à 0.120. De tels mélanges plus usuels pour ce type de couches conduisent à une meilleure cohésion.

Au sens de l'invention, un mélange caoutchouteux cohésif est un mélange caoutchouteux notamment robuste à la fissuration. La cohésion d'un mélange est ainsi évaluée par un test de fissuration en fatigue réalisé sur une éprouvette « PS » (pure shear). Il consiste à déterminer, après entaillage de l'éprouvette, la vitesse de propagation de fissure « Vp » (nm/cycle) en fonction du taux de restitution d'énergie « E » (J/m²). Le domaine expérimental couvert par la mesure est compris dans la plage -20°C et +150°C en température, avec une atmosphère d'air ou d'azote. La sollicitation de l'éprouvette est un déplacement dynamique imposé d'amplitude comprise entre 0.1mm et 10mm sous forme de sollicitation de type impulsionnel (signal « haversine » tangent) avec un temps de repos égal à la durée de l'impulsion ; la fréquence du signal est de l'ordre de 10Hz en moyenne.

La mesure comprend 3 parties :
- Une accommodation de l'éprouvette « PS », de 1000 cycles à 27% de déformation.
- une caractérisation énergétique pour déterminer la loi « E » = f (déformation). Le taux de restitution d'énergie « E » est égal à W0^{∗}h0, avec W0 = énergie fournie au matériau par cycle et par unité de volume et h0 = hauteur initiale de l'éprouvette. L'exploitation des acquisitions « force / déplacement » donne ainsi la relation entre « E » et l'amplitude de la sollicitation.

La mesure de fissuration, après entaillage de l'éprouvette « PS ». Les informations recueillies conduisent à déterminer la vitesse de propagation de la fissure « Vp » en fonction du niveau de sollicitation imposé « E ».

Les essais réalisés ont par ailleurs montré que les pneumatiques selon l'invention présentent des performances d'usure et notamment de régularité d'usure satisfaisantes quelles que soient les conditions d'utilisation des pneumatiques.

Les inventeurs ont en effet su mettre en évidence que des découpures d'orientation oblique dont la profondeur est supérieure à 40 % de l'épaisseur de la bande roulement et dont le ratio de la largeur mesurée au fond desdites découpures d'orientation oblique sur la largeur mesurée en surface de la bande de roulement desdites découpures d'orientation oblique est supérieur à 1.2 associées à une couche C de mélange caoutchouteux disposée entre au moins les extrémités desdites au moins deux couches de sommet de travail dont le module d'élasticité sous tension à 10 % d'allongement est supérieur à 9 MPa et dont la valeur maximale de tan(δ), noté tan(δ)max, est inférieure à 0.100 conduisent à une déformation locale de l'armature de sommet lors de la fabrication du pneumatique et notamment lors de la cuisson de celui-ci. Les inventeurs pensent interpréter cette déformation de l'armature sommet du fait d'un fluage des matériaux élastomériques non maîtrisés au niveau desdites découpures lors du moulage et de la cuisson dudit pneumatique. Cela se traduirait vraisemblablement par une déformation selon la direction radiale des couches constitutives de l'armature de sommet localisées à proximité desdites découpures. Ces déformations pourraient conduire lors de l'usage des pneumatiques à une altération des performances du pneumatique en termes d'usure et notamment de régularité d'usure, l'épaisseur de mélange à user n'étant pas régulière selon la direction transversale et/ou la direction longitudinale du pneumatique. La présence supplémentaire des couches C de mélange caoutchouteux disposée entre au moins les extrémités desdites au moins deux couches de sommet de travail dont le module d'élasticité sous tension à 10 % d'allongement est supérieur à 9 MPa et dont la valeur maximale de tan(δ), noté tan(δ)max, est inférieure à 0.100 ne semble pas favorable à une meilleure maitrise du fluage des matériaux élastomériques ; au contraire la présence de telles couches C semble favoriser ce phénomène de déformation de l'armature sommet lors de la fabrication du pneumatique et notamment lors de la cuisson de celui-ci, notamment pour les déformations liées aux découpures les plus proches desdites couches C.

La présence de la couche d'éléments de renforcement circonférentiels conformément à l'invention permet de limiter voire de prévenir ces phénomènes d'usures irrégulières selon la direction transversale et/ou la direction longitudinale.

Les inventeurs pensent interpréter les résultats obtenus avec les pneumatiques selon l'invention par la présence d'une couche d'éléments de renforcement circonférentiels qui semble pouvoir diminuer voir éviter lesdites déformations locales de l'armature de sommet lors de la cuisson de pneumatiques comportant des découpures d'orientation oblique dont la profondeur est supérieure ou égale à 40 % de l'épaisseur de la bande roulement et dont le ratio de la largeur mesurée au fond des découpures d'orientation oblique sur la largeur mesurée en surface de la bande de roulement des découpures d'orientation oblique est supérieur à 1.2 associées à une couche C de mélange caoutchouteux disposée entre au moins les extrémités desdites au moins deux couches de sommet de travail dont le module d'élasticité sous tension à 10 % d'allongement est supérieur à 9 MPa et dont la valeur maximale de tan(δ), noté tan(δ)max, est inférieure à 0.100.

De manière très surprenante, la couche d'éléments de renforcement circonférentiels, qui est usuellement présente pour limiter des effets de cisaillement entre les couches de sommet de travail, semble permettre une meilleure maîtrise des déplacements des mélanges formant la bande roulement lors de la cuisson d'un pneumatique, celui-ci comportant des découpures d'orientation oblique dont la profondeur est supérieure ou égale à 40 % de l'épaisseur de la bande roulement et dont le ratio de la largeur mesurée au fond des découpures d'orientation oblique sur la largeur mesurée en surface de la bande de roulement des découpures d'orientation oblique est supérieur à 1.2 associées à une couche C de mélange caoutchouteux disposée entre au moins les extrémités desdites au moins deux couches de sommet de travail dont le module d'élasticité sous tension à 10 % d'allongement est supérieur à 9 MPa et dont la valeur maximale de tan(δ), noté tan(δ)max, est inférieure à 0.100.

Par ailleurs, les inventeurs ont su mettre en évidence que la couche d'éléments de renforcement circonférentiels autorise des choix de mélanges caoutchouteux de la couche C présentant une cohésion moins favorable sans nuire aux propriétés d'endurance du pneumatique.

Les inventeurs ont notamment mis en évidence que la présence d'au moins une couche d'éléments de renforcement circonférentiels contribue à une moindre évolution de la cohésion de la couche C. En effet, les conceptions de pneumatiques plus usuelles comportant notamment des couches de mélange caoutchouteux disposées entre les extrémités des couches de sommet de travail avec des valeurs de tan(δ)ₘₐₓ supérieures à 0.120 conduisent à une évolution de la cohésion desdites couches de mélange caoutchouteux disposées entre les extrémités des couches de sommet de travail, celle-ci tendant à s'affaiblir. Les inventeurs constatent que la présence d'au moins une couche d'éléments de renforcement circonférentiels qui limite les contraintes de cisaillement entre les extrémités des couches de sommet de travail et en outre, limite les augmentations de température conduit à une faible évolution de la cohésion de la couche C. Les inventeurs considèrent ainsi que la cohésion de la couche C, plus faible que ce qui existe dans les conceptions de pneumatiques plus usuelles, est satisfaisante dans la conception du pneumatique selon l'invention.

Les inventeurs ont ainsi su mettre en évidence que la présence d'au moins une couche d'éléments de renforcement circonférentiels permet de conserver des performances notamment en termes d'endurance et en termes d'usure satisfaisantes en présence de la combinaison de découpures d'orientation oblique dont la profondeur est supérieure ou égale à 40 % de l'épaisseur de la bande roulement et dont le ratio de la largeur mesurée au fond des découpures d'orientation oblique sur la largeur mesurée en surface de la bande de roulement des découpures d'orientation oblique est supérieur à 1.2 et d'un module d'élasticité sous tension à 10 % d'allongement des couches C supérieur à 9 MPa et d'une valeur de tan(δ)ₘₐₓ des couches C inférieure à 0.100.

Selon une variante préférée de l'invention, la découpure présente un ratio de la largeur mesurée au fond de ladite au moins une découpure d'orientation oblique sur la largeur de ladite au moins une découpure d'orientation oblique mesurée en surface de la bande de roulement sur pneumatique neuf supérieur à 1.2 sur toute sa longueur.

Selon une autre variante de l'invention, cette condition sur le ratio de la largeur mesurée au fond de ladite au moins une découpure d'orientation oblique sur la largeur de ladite au moins une découpure d'orientation oblique mesurée en surface de la bande de roulement sur pneumatique neuf supérieur à 1.2 peut n'être vérifiée que sur une partie de la longueur de la découpure.

Selon encore d'autres variantes de l'invention, cette condition sur le ratio de la largeur mesurée au fond de ladite au moins une découpure d'orientation oblique sur la largeur de ladite au moins une découpure d'orientation oblique mesurée en surface de la bande de roulement sur pneumatique neuf supérieur à 1.2 peut être vérifiée par intermittence sur la longueur de la découpure.

Selon un mode de réalisation préféré de l'invention, la largeur mesurée au fond de ladite au moins une découpure d'orientation oblique est strictement supérieure à 3 mm.

De préférence encore selon l'invention, la largeur mesurée au fond de ladite au moins une découpure d'orientation oblique est inférieure à 10 mm.

Avantageusement selon l'invention, le taux d'entaillement volumique de la bande de roulement du pneumatique selon l'invention est inférieur ou égal à 15 %, de préférence inférieur ou égal à 13 % et de préférence encore supérieur à 5 %.

Le taux d'entaillement volumique de la bande de roulement est défini selon l'invention sur pneumatique neuf par le rapport du volume de découpures sur le volume total de la bande de roulement. Le volume total de la bande de roulement est quant à lui défini au sens de l'invention par le volume, incluant le volume de toutes les découpures, évalué entre la surface de roulement et une surface parallèle à cette surface de roulement passant par le fond du creux s'étendant le plus à l'intérieur de la bande.

Selon un mode de réalisation préféré de l'invention, la couche C de mélange caoutchouteux est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par du noir de carbone de surface spécifique BET inférieure à 60 m²/g, quelle que soit son indice de structure, employé à un taux compris entre 40 et 100 pce, et de préférence entre 60 et 90 pce,
b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m²/g employée à un taux compris entre 40 et 100 pce, et de préférence entre 60 et 90 pce,
c) soit par un coupage de noir de carbone décrit en (a) et d'une charge blanche décrite en (b), dans lequel le taux global de charge est compris entre 40 et 100 pce, et de préférence entre 60 et 90 pce.

La mesure de surface spécifique BET est effectuée selon la méthode de BRUNAUER, EMMET et TELLER décrite dans "The Journal of the American Chemical Society", vol. 60, page 309, février 1938, correspondant à la norme NFT 45007 de novembre 1987.

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge ≥ à 1/100 et ≤ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854.

Lorsqu'une charge claire est utilisée comme seule charge renforçante, les propriétés d'hystérèse et de cohésion sont obtenues en utilisant une silice précipitée ou pyrogénée, ou bien une alumine précipitée ou bien encore un aluminosilicate de surface spécifique BET comprise entre 30 et 260 m²/g. Comme exemples non limitatifs de ce type de charge, on peut citer les silices KS404 de la Société Akzo, Ultrasil VN2 ou VN3 et BV3370GR de la Société Degussa, Zeopol 8745 de la Société Huber, Zeosil 175MP ou Zeosil 1165MP de la société Rhodia, HI-SIL 2000 de la Société PPG etc...

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Le choix de la charge renforçante intervenant dans le mélange caoutchouteux constituant la couche C contribue à la fois à l'obtention des valeurs de module d'élasticité sous tension à 10 % d'allongement et à l'obtention des valeurs de tan(δ)ₘₐₓ. Toutefois, dans les plages de valeurs précitées concernant les dites charges renforçantes, l'homme du métier saura encore adapter les quantités d'autres constituants usuels, tels que les agents vulcanisant ou bien les dérivés de cobalt, ou adapter les procédés de mélangeages pour obtenir les valeurs de module d'élasticité et de tan(δ)ₘₐₓ précitées.

Selon une variante de réalisation de l'invention, la distance d entre l'extrémité de la couche de travail axialement la plus étroite et la couche de travail séparée de la couche de travail axialement la plus étroite par la couche C de mélange caoutchouteux est telle que 1.1ø < d < 2.2ø, ø étant le diamètre des éléments de renforcement de ladite au moins une couche d'éléments de renforcement circonférentiels et, dans un plan méridien, l'épaisseur de la couche C de mélange caoutchouteux étant sensiblement constante sur la largeur axiale comprise entre l'extrémité axialement intérieure de la couche C et l'extrémité de la couche de travail axialement la plus étroite.

Au sens de l'invention, la distance d est mesurée dans un plan méridien de câble à câble, c'est-à-dire entre le câble d'une première couche de travail et le câble d'une seconde couche de travail, selon une direction sensiblement perpendiculaire aux surfaces de la couche C. En d'autres termes, cette distance d englobe l'épaisseur de la première couche C et les épaisseurs respectives des mélanges caoutchouteux de calandrage, radialement extérieure aux câbles de la couche de travail radialement intérieure et radialement intérieure aux câbles de la couche de travail radialement extérieure.

Au sens de l'invention, l'épaisseur de la couche C de mélange caoutchouteux est mesurée entre les deux surfaces de ladite couche C selon la projection orthogonale d'un point d'une surface sur l'autre surface.

Au sens de l'invention, l'épaisseur de la couche C de mélange caoutchouteux est sensiblement constante signifie qu'elle ne varie pas de plus de 0.3 mm. Ces variations d'épaisseur ne sont dues qu'aux phénomènes de fluage lors de la fabrication et de la cuisson du pneumatique. La couche C sous forme de semi-fini, c'est-à-dire en tant qu'éléments prêt à être utilisé pour la réalisation d'un pneumatique présente ainsi avantageusement une épaisseur constante.

Les différentes mesures d'épaisseur sont effectuées sur une coupe transversale d'un pneumatique, le pneumatique étant donc dans un état non gonflé.

Les conceptions de pneumatiques plus usuelles, prévoient des couches de mélange caoutchouteux disposées entre les extrémités des couches de sommet de travail avec des épaisseurs plus importantes notamment au niveau de l'extrémité de la couche de travail la plus étroite et avec un profil d'épaisseur non homogène lorsque celui-ci est vu selon une coupe méridienne du pneumatique pour autoriser une telle épaisseur et pour éviter de trop perturber l'environnement de l'extrémité de la couche de travail la plus étroite. Comme expliqué précédemment, la présence de cette couche de mélange caoutchouteux permet notamment de limiter les contraintes de cisaillement entre les extrémités des couches de sommet de travail, les rigidités circonférentielles desdites couches de sommet de travail étant nulles à leur extrémité. La distance entre l'extrémité de la couche de travail axialement la plus étroite et la couche de travail séparée de la couche de travail axialement la plus étroite par la couche de mélange caoutchouteux, mesurée conformément à la définition de d ci-dessus, est habituellement supérieure à 3.3 mm. Cela correspond à une épaisseur de la couche de mélange caoutchouteux d'au moins 2.5 mm alors que, généralement, son épaisseur tend à chacune de ses extrémités vers une valeur inférieure à 0.5 mm.

Les inventeurs ont su mettre en évidence que la présence d'au moins une couche d'éléments de renforcement circonférentiels permet de conserver des performances notamment en termes d'endurance satisfaisantes avec une couche C de mélange caoutchouteux d'épaisseur sensiblement constante sur la largeur axiale comprise entre l'extrémité axialement intérieure de la couche C et l'extrémité de la couche de travail axialement la plus étroite et telle que la distance d soit comprise entre 1.1ø et 2.2ø. Il semble en effet, que la présence de la couche d'éléments de renforcement circonférentiels contribue suffisamment à la reprise d'au moins une partie de la tension circonférentielle notamment lors du passage dans l'aire de contact pour diminuer les contraintes de cisaillement entre les extrémités des couches de sommet de travail.

La géométrie de la couche C de mélange caoutchouteux conforme à l'invention semble, en outre, aller dans le sens d'une meilleure maîtrise du fluage des mélanges lors de la fabrication du pneumatique et notamment de la cuisson de celui-ci.

Par ailleurs, la couche C de mélange caoutchouteux se présente ainsi avantageusement à l'état de semi-fini sous forme d'une couche d'épaisseur constante qui est simple de fabrication et en outre qui peut être stockée simplement. En effet, les couches habituellement utilisées telles que décrites précédemment qui présentent en coupe une forme avec des variations d'épaisseur sont d'une part plus difficiles réaliser et d'autre part plus difficile à stocker. En effet, les variations d'épaisseur créent des problèmes de stockage, ces semi-finis étant le plus souvent stockés sous forme d'enroulement sur bobine. La couche C selon l'invention se présente à l'état de produit semi-fini avec une section présentant un profil sensiblement plat comparée aux couches habituellement utilisées qui se présentent à l'état de produit semi-fini avec une section présentant un profil sensiblement arrondi.

La fabrication et le stockage de la couche de mélange caoutchouteux conforme à l'invention sous forme de semi-fini étant ainsi tellement simplifiés, il peut en résulter des coûts moindres pour la fabrication du pneumatique.

De préférence encore, la largeur axiale D de la couche de mélange caoutchouteux C comprise entre l'extrémité axialement la plus à l'intérieure de ladite couche de mélange caoutchouteux C et l'extrémité de la couche de sommet de travail axialement la moins large est telle que :
3.φ₂ ≤ D ≤ 25.φ₂
avec φ2, diamètre des éléments de renforcement de la couche de sommet de travail axialement la moins large. Une telle relation définit une zone d'engagement entre la couche de mélange caoutchouteux C et la couche de sommet de travail axialement la moins large. Un tel engagement en dessous d'une valeur égale à trois fois le diamètre des éléments de renforcement de la couche de travail axialement la moins large peut ne pas être suffisant pour obtenir un découplage des couche de sommet de travail pour notamment obtenir une atténuation des sollicitations en extrémité de la couche de sommet de travail axialement la moins large. Une valeur de cet engagement supérieure à vingt fois le diamètre des éléments de renforcement de la couche de travail axialement la moins large peut conduire à une diminution trop importante de la rigidité de dérive de l'armature de sommet du pneumatique.

De préférence, la largeur axiale D de la couche de mélange caoutchouteux C comprise entre l'extrémité axialement la plus à l'intérieure de ladite couche de mélange caoutchouteux C et l'extrémité de la couche de sommet de travail axialement la moins large est supérieure à 5 mm.

Selon une variante de réalisation de l'invention, le module d'élasticité sous tension à 10 % d'allongement d'au moins une couche de calandrage d'au moins une couche de sommet de travail est supérieur à 9 MPa et la valeur maximale de tan(δ), noté tan(δ)ₘₐₓ, de ladite au moins une couche de calandrage d'au moins une couche de sommet de travail est inférieure à 0.100.

Habituellement, les couches de calandrage des couches de sommet de travail présentent des modules d'élasticité sous tension à 10 % d'allongement sensiblement équivalents à ceux de ladite au moins une couche de calandrage d'au moins une couche de sommet de travail selon l'invention mais présentent des valeurs maximales de tan(δ), noté tan(δ)ₘₐₓ, supérieures à 0.120. De tels mélanges plus usuels pour ce type de couches conduisent à une meilleure cohésion.

Comme dans le cas de la couche C, les inventeurs ont su mettre en évidence que la cohésion des couches de calandrages des couches de sommet de travail, lorsqu'elles présentent un module d'élasticité sous tension à 10 % d'allongement supérieur à 9 MPa et une valeur de tan(δ)ₘₐₓ inférieure à 0.100, reste satisfaisante.

Les inventeurs ont encore mis en évidence que la présence d'au moins une couche d'éléments de renforcement circonférentiels contribue à une moindre évolution de la cohésion des couches de calandrage des couches de sommet de travail. En effet, les inventeurs ont constaté que la présence d'au moins une couche d'éléments de renforcement circonférentiels qui contribue à limiter les mises en compression des éléments de renforcement des couches de sommet de travail notamment lorsque le véhicule suit un parcours sinueux et en outre, limite les augmentations de température et conduit ainsi à une faible évolution de la cohésion des couches de calandrages. Les inventeurs considèrent ainsi que la cohésion des couches de calandrages des couches de sommet de travail, plus faible que ce qui existe dans les conceptions de pneumatiques plus usuelles, est satisfaisante dans la conception du pneumatique selon l'invention.

Les inventeurs ont ainsi su mettre en évidence que la couche d'élément de renforcement circonférentiels autorise des choix de mélanges caoutchouteux des couches de calandrages des couches de sommet de travail présentant une cohésion moins favorable sans nuire aux propriétés d'endurance du pneumatique.

Comme dans le cas de la couche de mélange caoutchouteux C, l'utilisation d'au moins une couche de calandrage d'au moins une couche de sommet de travail dont le module d'élasticité est supérieur ou égal à 9 MPa et dont la valeur tan(δ)ₘₐₓ est inférieure à 0.100 va permettre d'améliorer les propriétés du pneumatique en matière de résistance au roulement en conservant des propriétés d'endurance satisfaisante.

Selon un mode de réalisation préféré de l'invention, ladite au moins une couche de calandrage d'au moins une couche de sommet de travail est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par du noir de carbone de surface spécifique BET inférieure à 60 m²/g, quelle que soit son indice de structure, employé à un taux compris entre 40 et 100 pce, et de préférence entre 60 et 90 pce,
b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m²/g employée à un taux compris entre 40 et 100 pce, et de préférence entre 60 et 90 pce,
c) soit par un coupage de noir de carbone décrit en (a) et d'une charge blanche décrite en (b), dans lequel le taux global de charge est compris entre 40 et 100 pce, et de préférence entre 60 et 90 pce.

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge ≥ à 1/100 et ≤ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854.

Lorsqu'une charge claire est utilisée comme seule charge renforçante, les propriétés d'hystérèse et de cohésion sont obtenues en utilisant une silice précipitée ou pyrogénée, ou bien une alumine précipitée ou bien encore un aluminosilicate de surface spécifique BET comprise entre 30 et 260 m²/g. Comme exemples non limitatifs de ce type de charge, on peut citer les silices KS404 de la Société Akzo, Ultrasil VN2 ou VN3 et BV3370GR de la Société Degussa, Zeopol 8745 de la Société Huber, Zeosil 175MP ou Zeosil 1165MP de la société Rhodia, HI-SIL 2000 de la Société PPG etc...

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Comme dans le cas de la couche C, le choix de la charge renforçante intervenant dans le mélange caoutchouteux constituant ladite au moins une couche de calandrage d'au moins une couche de sommet de travail contribue à la fois à l'obtention des valeurs de module d'élasticité sous tension à 10 % d'allongement et à l'obtention des valeurs de tan(δ)ₘₐₓ. Toutefois, dans les plages de valeurs précitées concernant les dites charges renforçantes, l'homme du métier saura encore adapter les quantités d'autres constituants usuels, tels que les agents vulcanisant ou bien les dérivés de cobalt, ou adapter les procédés de mélangeages pour obtenir les valeurs de module d'élasticité et de tan(δ)ₘₐₓ précitées.

Avantageusement encore selon l'invention, la différence entre le module d'élasticité sous tension à 10 % d'allongement de la couche C et le module d'élasticité sous tension à 10 % d'allongement de ladite au moins une couche de calandrage d'au moins une couche de sommet de travail est inférieure à 2 MPa.

Selon un premier mode de réalisation, le module d'élasticité du calandrage d'au moins la couche de sommet de travail la plus étroite est supérieure à celui de ladite couche de mélange caoutchouteux C pour que l'empilement desdites couches présente un gradient de module d'élasticité favorable à la lutte contre l'amorce de fissuration en extrémité de la couche de sommet de travail la plus étroite.

Selon un deuxième mode de réalisation, les modules d'élasticité du calandrage des couches de sommet de travail et de celui de ladite couche de mélange caoutchouteux C sont identiques et avantageusement encore les mélanges caoutchouteux sont les mêmes pour simplifier les conditions industrielles de fabrication du pneumatique.

Selon une variante de réalisation de l'invention, le pneumatique présente, en association avec ladite au moins une découpure d'orientation oblique, au moins dans ladite partie centrale de la bande de roulement au moins une découpure d'orientation longitudinale, la profondeur, mesurée sur pneumatique neuf dans au moins ladite partie centrale, de ladite au moins une découpure d'orientation longitudinale étant supérieure ou égale à 40 % de l'épaisseur de la bande roulement et le ratio de la largeur mesurée au fond de ladite au moins une découpure d'orientation longitudinale sur la largeur mesurée en surface de la bande de roulement sur pneumatique neuf de ladite au moins une découpure d'orientation longitudinale étant supérieur à 1.2.

Au sens de l'invention, une découpure d'orientation longitudinale est une découpure dont le plan moyen d'au moins une partie des parois de ladite découpure forme un angle avec un plan longitudinal inférieur à 10°. Cet angle formé avec un plan longitudinal peut être orienté dans un sens ou dans l'autre par rapport audit plan longitudinal. Une découpure d'orientation longitudinale peut encore être une découpure dont les parois ondulent ou zigzaguent autour d'un plan moyen tel qu'il vient d'être décrit.

Alors que la présence de creux cachés longitudinaux tels que définis selon l'invention associés aux découpures d'orientation oblique comportant des creux cachés telles que décrites précédemment conduit à des usures irrégulières de la bande de roulement sur des pneumatiques de conception usuelles, les essais réalisés ont montré que les pneumatiques selon l'invention présentent des performances d'usure et notamment de régularité d'usure satisfaisantes quelles que soient les conditions d'utilisation des pneumatiques et quelles que soient la forme et la dimension des creux cachés longitudinaux.

Les inventeurs ont en effet su mettre en évidence que la présence de découpures d'orientation longitudinale dont la profondeur est supérieure à 40 % de l'épaisseur de la bande roulement et dont le ratio de la largeur mesurée au fond desdites découpures d'orientation longitudinale sur la largeur mesurée en surface de la bande de roulement desdites découpures d'orientation longitudinale est supérieur à 1.2 associée aux découpures d'orientation oblique comportant des creux cachés telles que décrites précédemment contribue à générer des irrégularités d'usure selon la direction transversale du pneumatique.

Les inventeurs interprètent les résultats obtenus avec les pneumatiques réalisés selon cette variante de l'invention par la présence de la couche d'éléments de renforcement circonférentiels qui permet de diminuer voir éviter lesdites déformations locales de l'armature de sommet lors de la cuisson de pneumatiques comportant des découpures d'orientation longitudinale telles que décrites associées aux découpures obliques décrites précédemment.

Selon une variante préférée de l'invention, la découpure d'orientation longitudinale présente un ratio de la largeur mesurée au fond de ladite au moins une découpure d'orientation longitudinale sur la largeur de ladite au moins une découpure d'orientation longitudinale mesurée en surface de la bande de roulement sur pneumatique neuf supérieur à 1.2 sur toute sa longueur.

Selon une autre variante de l'invention, cette condition sur le ratio de la largeur mesurée au fond de ladite au moins une découpure d'orientation longitudinale sur la largeur de ladite au moins une découpure d'orientation longitudinale mesurée en surface de la bande de roulement sur pneumatique neuf supérieur à 1.2 peut n'être vérifiée que sur une partie de la longueur de la découpure d'orientation longitudinale.

Selon encore d'autres variantes de l'invention, cette condition sur le ratio de la largeur mesurée au fond de ladite au moins une découpure d'orientation longitudinale sur la largeur de ladite au moins une découpure d'orientation longitudinale mesurée en surface de la bande de roulement sur pneumatique neuf supérieur à 1.2 peut être vérifiée par intermittence sur la longueur de la découpure d'orientation longitudinale.

De préférence selon cette variante de l'invention, la largeur mesurée au fond de ladite au moins une découpure d'orientation longitudinale est strictement supérieure à 3 mm.

De préférence encore selon cette variante de l'invention, la largeur mesurée au fond de ladite au moins une découpure d'orientation longitudinale est inférieure à 10 mm.

Selon une autre variante de réalisation de l'invention, le pneumatique présente, en association avec ladite au moins une découpure d'orientation oblique, au moins dans ladite partie centrale de la bande de roulement au moins une découpure d'orientation transversale, la profondeur, mesurée sur pneumatique neuf dans au moins ladite partie centrale, de ladite au moins une découpure d'orientation transversale étant supérieure ou égale à 40 % de l'épaisseur de la bande roulement et le ratio de la largeur mesurée au fond de ladite au moins une découpure d'orientation transversale sur la largeur mesurée en surface de la bande de roulement sur pneumatique neuf de ladite au moins une découpure d'orientation transversale étant supérieur à 1.2.

Au sens de l'invention, une découpure d'orientation transversale est une découpure dont le plan moyen d'au moins une partie des parois de ladite découpure forme un angle avec un plan radial inférieur à 35°. Cet angle formé avec un plan radial peut être orienté dans un sens ou dans l'autre par rapport audit plan radial. Une découpure d'orientation transversale peut encore être une découpure qui chemine continument de part et d'autre d'un plan moyen tel qu'il vient d'être décrit ; il peut encore s'agir d'une découpure dont les parois ondulent ou zigzaguent autour d'un plan moyen tel qu'il vient d'être décrit.

Alors que la présence de creux cachés transversaux tels que définis selon l'invention associés aux découpures d'orientation oblique comportant des creux cachés telles que décrites précédemment conduit à des usures irrégulières de la bande de roulement sur des pneumatiques de conception usuelles, les essais réalisés ont montré que les pneumatiques selon l'invention présentent des performances d'usure et notamment de régularité d'usure satisfaisantes quelles que soient les conditions d'utilisation des pneumatiques et quelles que soient la forme et la dimension des creux cachés transversaux.

Les inventeurs ont en effet su mettre en évidence que la présence de découpures d'orientation transversale dont la profondeur est supérieure à 40 % de l'épaisseur de la bande roulement et dont le ratio de la largeur mesurée au fond desdites découpures d'orientation transversale sur la largeur mesurée en surface de la bande de roulement desdites découpures d'orientation transversale est supérieur à 1.2 associée aux découpures d'orientation oblique comportant des creux cachés telles que décrites précédemment contribue à générer des irrégularités d'usure selon la direction longitudinale du pneumatique.

Les inventeurs interprètent les résultats obtenus avec les pneumatiques réalisés selon cette variante de l'invention par la présence de la couche d'éléments de renforcement circonférentiels qui permet de diminuer voir éviter lesdites déformations locales de l'armature de sommet lors de la cuisson de pneumatiques comportant des découpures d'orientation transversale telles que décrites associées aux découpures obliques décrites précédemment.

Selon une variante préférée de l'invention, la découpure d'orientation transversale présente de préférence un ratio de la largeur mesurée au fond de ladite au moins une découpure d'orientation transversale sur la largeur de ladite au moins une découpure d'orientation transversale mesurée en surface de la bande de roulement sur pneumatique neuf supérieur à 1.2 sur toute sa longueur.

Selon une autre variante de l'invention, cette condition sur le ratio de la largeur mesurée au fond de ladite au moins une découpure d'orientation transversale sur la largeur de ladite au moins une découpure d'orientation transversale mesurée en surface de la bande de roulement sur pneumatique neuf supérieur à 1.2 peut n'être vérifiée que sur une partie de la longueur de la découpure d'orientation transversale.

Selon encore d'autres variantes de l'invention, cette condition sur le ratio de la largeur mesurée au fond de ladite au moins une découpure d'orientation transversale sur la largeur de ladite au moins une découpure d'orientation transversale mesurée en surface de la bande de roulement sur pneumatique neuf supérieur à 1.2 peut être vérifiée par intermittence sur la longueur de la découpure d'orientation transversale.

De préférence selon cette variante de l'invention, la largeur mesurée au fond de ladite au moins une découpure d'orientation transversale est strictement supérieure à 2 mm.

Avantageusement selon l'invention, la largeur mesurée au fond de ladite au moins une découpure d'orientation transversale est inférieure à 10 mm.

Selon d'autres variantes de l'invention, le pneumatique présente, en association avec ladite au moins une découpure d'orientation oblique, au moins dans ladite partie centrale au moins une découpure d'orientation longitudinale et au moins une découpure d'orientation transversale, la profondeur, mesurée sur pneumatique neuf dans au moins ladite partie centrale, de ladite au moins une découpure d'orientation longitudinale étant supérieure ou égale à 40 % de l'épaisseur de la bande roulement, le ratio de la largeur mesurée au fond de ladite au moins une découpure d'orientation longitudinale sur la largeur mesurée en surface de la bande de roulement sur pneumatique neuf de ladite au moins une découpure d'orientation longitudinale étant supérieur à 1.2, la profondeur, mesurée sur pneumatique neuf dans au moins ladite partie centrale, de ladite au moins une découpure d'orientation transversale étant supérieure ou égale à 40 % de l'épaisseur de la bande roulement et le ratio de la largeur mesurée au fond de ladite au moins une découpure d'orientation transversale sur la largeur mesurée en surface de la bande de roulement sur pneumatique neuf de ladite au moins une découpure d'orientation transversale étant supérieur ou égal à 1.2.

Les inventeurs ont encore mis en évidence que la présence de la couche d'éléments de renforcement circonférentiels permet de diminuer voir éviter lesdites déformations locales de l'armature de sommet lors de la cuisson de pneumatiques comportant des découpures d'orientation transversale comportant des creux cachés telles que décrites associées d'une part aux découpures obliques comportant des creux cachés décrites précédemment et d'autre part à des découpures d'orientation longitudinale comportant des creux cachés telles que décrites également précédemment.

Selon un mode de réalisation avantageux de l'invention, la couche de sommet de travail axialement la plus large est radialement à l'intérieur des autres couches de sommet de travail.

Selon une variante avantageuse de réalisation de l'invention, la couche d'éléments de renforcement circonférentiels présente une largeur axiale supérieure à 0.5xW.

W est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préférée de l'invention, une couche d'éléments de renforcement circonférentiels est radialement disposée entre deux couches de sommet de travail.

Selon ce mode de réalisation de l'invention, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par une couche C de mélange de caoutchouc au moins sur le restant de la largeur commune aux dites deux couches de travail.

La présence de tels couplages entre les couches de sommet de travail adjacentes à la couche d'éléments de renforcement circonférentiels permet la diminution des contraintes de tension agissant sur les éléments circonférentiels axialement le plus à l'extérieur et situé le plus près du couplage.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Les éléments métalliques sont préférentiellement des câbles d'acier.

Selon un mode de réalisation préféré de l'invention, les éléments de renforcement des couches de sommet de travail sont des câbles métalliques inextensibles.

Avantageusement selon l'invention, l'armature de sommet est formée d'au moins deux couches de sommet de travail d'éléments de renforcement, croisés d'une couche à l'autre en faisant avec la direction circonférentielle des angles compris entre 10° et 45°.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Selon une autre variante avantageuse de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence aux figures 1 à 3 qui représentent :
- figure 1, une vue méridienne d'un schéma d'un pneumatique selon l'invention,
- figure 2, une vue en projection d'un schéma d'une partie de la surface d'une bande de roulement d'un pneumatique selon l'invention,
- figure 3, une vue en coupe selon le plan de coupe P d'une découpure selon un mode de réalisation de l'invention.

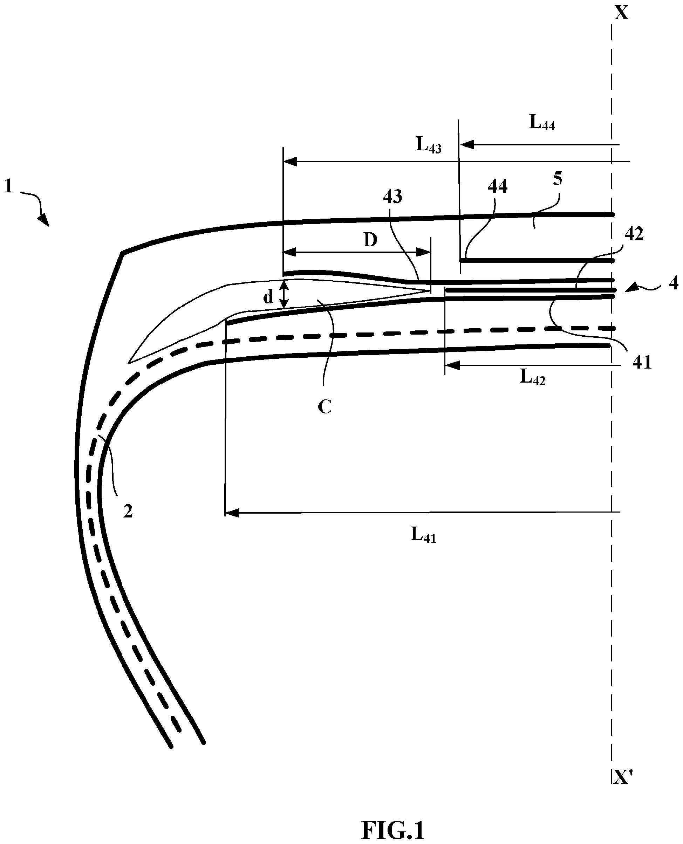

Les figures ne sont pas représentées à l'échelle pour en simplifier la compréhension. La figure 1 ne représente qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 315/70 R 22.5, a un rapport de forme H/S égal à 0, 70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :
- d'une première couche de travail 41 formée de câbles métalliques inextensibles 9.28 non frettés, continus sur toute la largeur de la nappe, orientés d'un angle égal à 24°,
- d'une couche d'éléments de renforcement circonférentiels 42 formée de câbles métalliques en acier 21x23, de type "bi-module",
- d'une seconde couche de travail 43 formée de câbles métalliques inextensibles 9.28 non frettés, continus sur toute la largeur de la nappe, orientés d'un angle égal à 24° et croisés avec les câbles métalliques de la couche 41,
- d'une couche de protection 44 formées de câbles métalliques élastiques 6.35.

L'armature de sommet est elle-même coiffée d'une bande de roulement 6.

La largeur axiale maximale W du pneumatique est égale à 317 mm.

La largeur axiale L₄₁ de la première couche de travail 41 est égale à 252 mm.

La largeur axiale L₄₃ de la deuxième couche de travail 43 est égale à 232 mm.

Quant à la largeur axiale L₄₂ de la couche d'éléments de renforcement circonférentiels 42, elle est égale à 194 mm.

La dernière nappe de sommet 44, dite de protection, a une largeur L₄₄ égale à 124 mm.

Conformément à l'invention, une couche de mélange caoutchouteux C vient découpler les extrémités des couches de sommet de travail 41 et 43.

La zone d'engagement de la couche C entre les deux couches de sommet de travail 41 et 43 est définie par son épaisseur ou plus précisément la distance radiale d entre l'extrémité de la couche 43 et la couche 41 et par la largeur axiale D de la couche C comprise entre l'extrémité axialement intérieure de ladite couche C et l'extrémité de la couche de sommet de travail 43 radialement extérieure. La distance radiale d est égale à 3.5 mm soit environ 2.1 fois le diamètre φ₂ des éléments de renforcement de la couche de sommet de travail 43, le diamètre φ₂ étant égal à 1.65 mm. La distance axiale D est égale à 20 mm, soit environ 12 fois le diamètre φ₂ des éléments de renforcement de la couche de sommet de travail 43.

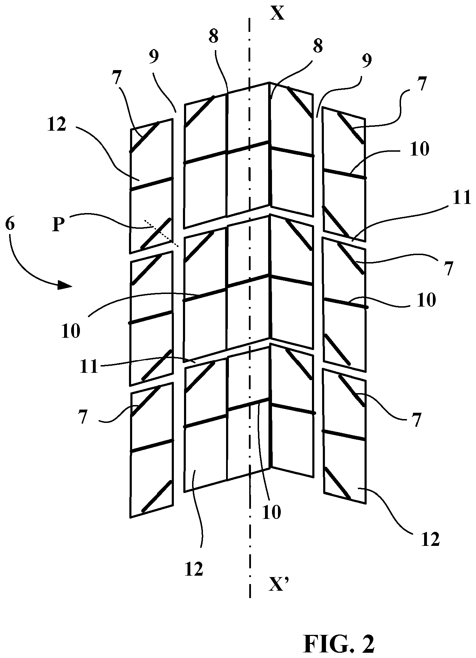

La figure 2 illustre une vue en projection d'un schéma d'une partie de la surface 6 d'une bande de roulement 5 d'un pneumatique 1. La surface 6 de la bande de roulement 5 est formée de découpures obliques 7, de découpures longitudinales 8 et 9, et de découpures transversales 10 et 11. Les découpures longitudinales 9 et transversales 11 sont des rainures. Les découpures obliques 7, les découpures longitudinales 8 et les découpures transversales 10 sont des incisions. L'ensemble de ces découpures 7, 8, 9, 10 et 11 forment les éléments de sculptures 12 constituant la bande de roulement 5.

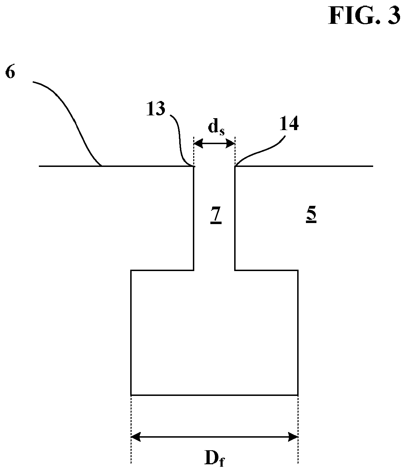

Sur la figure 3, est représentée schématiquement une découpure oblique 7 en coupe selon le plan de coupe P. Ce plan de coupe P est perpendiculaire au plan moyen des parois et au plan tangent à la surface 6 de la bande de roulement 5. La largeur D_{f} de la découpure oblique 7 en fond de découpure est égale à 7 mm. La largeur dₛ de la découpure oblique 7 en surface de la bande de roulement 5 est mesurée entre les extrémités 13 et 14 de ladite découpure oblique 7 en surface 6 de la bande de roulement 5. Elle est égale à 0.7 mm. Le ratio D_{f}/ dₛ est égal à 10.

Dans le cas de la figure 3, la découpure oblique 7 forme une incision en surface de la bande de roulement qui conformément à la définition donnée précédemment présente une largeur inférieure à 2 mm. Après usure de la bande de roulement, le creux caché sous ladite incision fait apparaître une rainure. Comme expliqué précédemment, lorsque le pneumatique est neuf, l'incision permet de former des arêtes tout en conservant une rigidité de la bande de roulement importante, les parois venant au contact l'une de l'autre au moment du contact avec le sol. Après usure, lorsque le creux caché apparaît il forme une rainure et donc des arêtes, la rigidité étant conservée du fait de la profondeur de la découpure moins importante dans la bande de roulement.

Des essais ont été réalisés avec différents pneumatiques réalisés selon l'invention et comparés avec des pneumatiques de référence.

Des essais sont notamment réalisés en faisant varier les caractéristiques des mélanges de la couche C, notamment la valeur tan(δ)ₘₐₓ.

Les différents mélanges utilisés sont listés ci-après.

| | Mélange R1 | Mélange 1 |
|---|---|---|
| NR | 100 | 100 |
| Noir N347 | 52 | |
| Noir N683 | | 63 |
| Antioxydant (6PPD) | 1 | 1 |
| Acide stéarique | 0.65 | 0.65 |
| Oxyde de zinc | 9.3 | 9.3 |
| Sel de Cobalt (AcacCo) | 1.12 | 1.12 |
| soufre | 6.1 | 6.1 |
| Accélérateur DCBS | 0.93 | 0.93 |
| Retardateur CTP (PVI) | 0.25 | 0.25 |
| MA₁₀ (MPa) | 10.4 | 10.03 |
| tan(δ)ₘₐₓ | 0.130 | 0.092 |
| P60 (%) | 22.9 | 17.4 |

Les pneumatiques I selon l'invention sont réalisés conformément aux figures 1 à 3 et ils possèdent des couches C qui sont constitués du mélanges 1.

Des premiers pneumatiques de référence T₁ sont réalisés conformément aux figures 2-3, ils possèdent des couches C qui sont constitués du mélange 1 et leur architecture sommet diffère en ce que l'armature sommet ne comporte pas de couche d'éléments de renforcement circonférentiels.

Des seconds pneumatiques de référence T₂ sont réalisés conformément aux figures 1-3 et ils possèdent des couches C qui sont constitués du mélange R1.

Des premiers essais ont consistés en des roulages simulant un usage moyen des pneumatiques lorsqu'ils équipent des véhicules de type Poids lourds. Le but de ces essais est de contrôler l'état des pneumatiques au cours des roulages et d'identifier d'éventuels problèmes d'irrégularités d'usure de la bande de roulement.

Au cours des roulages, les pneumatiques de référence T₁ font apparaître des irrégularités d'usure selon la direction circonférentielle. De telles irrégularités d'usure peuvent dans certaines conditions avoir des effets négatifs sur les propriétés d'adhérence du pneumatique car la surface de l'aire de contact peut s'en trouver modifiée. En outre, l'apparition de telles irrégularités d'usure conduit à une augmentation de la vitesse d'usure des pneumatiques et donc une durée d'utilisation moindre qu'espérée.

Concernant les pneumatiques selon l'invention et les pneumatiques de référence T₂, les essais montrent que de telles irrégularités d'usure apparaissent plus tardivement et de manière beaucoup moins prononcée de sorte que les propriétés d'adhérence ne sont quasiment pas affectées quelles que soient les conditions de roulage.

Des deuxièmes essais correspondant à des essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

Il s'avère que l'ensemble des pneumatiques testés présente des résultats sensiblement comparables.

Un troisième type d'essais correspondant également à des essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les distances parcourues varient d'un type de pneumatique à l'autre, des déchéances apparaissant du fait d'une dégradation des mélanges caoutchouteux au niveau des extrémités des couches de travail. Les résultats sont exprimés dans le tableau qui suit en référence à une base 100 fixé pour le pneumatique de référence T₁.

| Pneumatique T₁ | Pneumatique T₂ | Pneumatique I |
|---|---|---|
| 100 | 105 | 105 |

Ces essais montrent notamment que la conception des pneumatiques selon l'invention autorise l'utilisation de mélanges de la couche C présentant une cohésion moins favorable sans nuire aux performances d'endurance lorsqu'une couche d'éléments de renforcement circonférentiels est présente.

Par ailleurs, des mesures de résistance au roulement ont été effectuées. Ces mesures ont portés sur le pneumatique de référence T2 tel que décrit précédemment, et sur des pneumatiques selon l'invention I tel que décrit précédemment, le mélange 1 étant utilisé pour la couche C.

Les résultats des mesures sont présentés dans le tableau suivant ; elles sont exprimées en Kg/t, une valeur de 100 étant attribuée au pneumatique T₂.

| Pneumatique T₂ | Pneumatique I |
|---|---|
| 100 | 99 |

## Revendications

1. Pneumatique (1) à armature de carcasse radiale (2) comprenant une armature de sommet (4) formée d'au moins deux couches de sommet de travail d'éléments de renforcement (41, 43), une couche (C) de mélange caoutchouteux étant disposée entre au moins les extrémités desdites au moins deux couches de sommet de travail (41, 43), ladite armature de sommet étant coiffée radialement d'une bande de roulement (5), ladite bande de roulement étant réunie à deux bourrelets par l'intermédiaire de deux flancs, l'armature de sommet (4) comportant au moins une couche d'éléments de renforcement circonférentiels (42), ladite bande de roulement comportant une surface de roulement (6) destinée à venir en contact avec une chaussée et former une surface de contact, le module d'élasticité sous tension à 10 % d'allongement de la couche (C) de mélange caoutchouteux étant supérieur à 9 MPa, la mesure du module d'élasticité étant effectuée en traction selon la norme AFNOR-NFT-46002 de septembre 1988 dans les conditions normales de température et d'hygrométrie selon la norme AFNOR-NFT-40101 de décembre 1979, la valeur maximale de tan(δ), noté tan(δ)max, de la couche (C) de mélange caoutchouteux étant inférieure à 0.100, le facteur de perte tan(δ) étant mesuré selon la norme ASTM D 5992-96, **caractérisé en ce que** ladite bande de roulement (5) est constituée d'au moins une partie centrale s'étendant au moins dans la zone du plan équatorial et deux parties axialement extérieures et présente au moins dans ladite partie centrale au moins une découpure d'orientation oblique (7), une découpure d'orientation oblique étant une découpure dont le plan moyen d'au moins une partie des parois de ladite découpure forme un angle avec un plan radial compris entre 35° et 80°, **en ce que** la profondeur, mesurée sur pneumatique neuf dans au moins ladite partie centrale, de ladite au moins une découpure d'orientation oblique (7) est supérieure ou égale à 40 % de l'épaisseur de la bande roulement, et **en ce que** le ratio de la largeur (D_{f}) mesurée au fond de ladite au moins une découpure d'orientation oblique (7) sur la largeur (dₛ) mesurée en surface de la bande de roulement sur pneumatique neuf de ladite au moins une découpure d'orientation oblique (7) est supérieur à 1.2.

2. Pneumatique (1) selon la revendication 1, **caractérisé en ce que** la largeur (D_{f}) mesurée au fond de ladite au moins une découpure d'orientation oblique (7) est strictement supérieure à 3 mm.

3. Pneumatique (1) selon la revendication 2, **caractérisé en ce que** la largeur (D_{f}) mesurée au fond de ladite au moins une découpure d'orientation oblique (7) est inférieure à 10 mm.

4. Pneumatique (1) selon l'une des revendications précédentes, **caractérisé en ce que** la couche (C) de mélange caoutchouteux est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par du noir de carbone de surface spécifique BET inférieure à 60 m²/g, quelle que soit son indice de structure, employé à un taux compris entre 40 et 100 pce, et de préférence entre 60 et 90 pce,
b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m²/g employée à un taux compris entre 40 et 100 pce, et de préférence entre 60 et 90 pce,
c) soit par un coupage de noir de carbone décrit en (a) et d'une charge blanche décrite en (b), dans lequel le taux global de charge est compris entre 40 et 100 pce, et de préférence entre 60 et 90 pce,
la mesure de surface spécifique BET étant effectuée selon la méthode de BRUNAUER, EMMET et TELLER décrite dans "The Journal of the American Chemical Society", vol. 60, page 309, février 1938, correspondant à la norme NFT 45007 de novembre 1987.

5. Pneumatique (1) selon l'une des revendications précédentes, lesdites au moins deux couches de sommet de travail (41, 43) étant chacune formée d'éléments de renforcement insérés entre deux couches de calandrage de mélange caoutchouteux, **caractérisé en ce que** le module d'élasticité sous tension à 10 % d'allongement d'au moins une couche de calandrage d'au moins une couche de sommet de travail (41, 43) est supérieur à 9 MPa et **en ce que** la valeur maximale de tan(δ), noté tan(δ)max, de ladite au moins une couche de calandrage d'au moins une couche de sommet de travail (41, 43) est inférieure à 0.100.

6. Pneumatique (1) selon la revendication 5, **caractérisé en ce que** ladite au moins une couche de calandrage d'au moins une couche de sommet de travail (41, 43) est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par du noir de carbone de surface spécifique BET inférieure à 60 m²/g, quelle que soit son indice de structure, employé à un taux compris entre 40 et 100 pce, et de préférence entre 60 et 90 pce,
b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m²/g employée à un taux compris entre 40 et 100 pce, et de préférence entre 60 et 90 pce,
**c)** soit par un coupage de noir de carbone décrit en (a) et d'une charge blanche décrite en (b), dans lequel le taux global de charge est compris entre 40 et 100 pce, et de préférence entre 60 et 90 pce,
la mesure de surface spécifique BET étant effectuée selon la méthode de BRUNAUER, EMMET et TELLER décrite dans "The Journal of the American Chemical Society", vol. 60, page 309, février 1938, correspondant à la norme NFT 45007 de novembre 1987.

7. Pneumatique (1) selon l'une des revendications précédentes, présentant au moins dans ladite partie centrale au moins une découpure d'orientation longitudinale (8), **caractérisé en ce que** la profondeur, mesurée sur pneumatique neuf dans au moins ladite partie centrale, de ladite au moins une découpure d'orientation longitudinale (8) est supérieure ou égale à 40 % de l'épaisseur de la bande roulement, **en ce que** le ratio de la largeur mesurée au fond de ladite au moins une découpure d'orientation longitudinale (8) sur la largeur mesurée en surface de la bande de roulement sur pneumatique neuf de ladite au moins une découpure d'orientation longitudinale (8) est supérieur à 1.2.

8. Pneumatique (1) selon la revendication 7, **caractérisé en ce que** la largeur mesurée au fond de ladite au moins une découpure d'orientation longitudinale (8) est strictement supérieure à 3 mm.

9. Pneumatique (1) selon la revendication 8, **caractérisé en ce que** la largeur mesurée au fond de ladite au moins une découpure d'orientation longitudinale (8) est inférieure à 10 mm.

10. Pneumatique (1) selon l'une des revendications précédentes, présentant au moins dans ladite partie centrale au moins une découpure d'orientation transversale (10), **caractérisé en ce que** la profondeur, mesurée sur pneumatique neuf dans au moins ladite partie centrale, de ladite au moins une découpure d'orientation transversale (10) est supérieure ou égale à 40 % de l'épaisseur de la bande roulement et **en ce que** le ratio de la largeur mesurée au fond de ladite au moins une découpure d'orientation transversale (10) sur la largeur mesurée en surface de la bande de roulement sur pneumatique neuf de ladite au moins une découpure d'orientation transversale (10) est supérieur à 1.2.

11. Pneumatique (1) selon la revendication 10, **caractérisé en ce que** la largeur mesurée au fond de ladite au moins une découpure d'orientation transversale (10) est strictement supérieure à 2 mm.

12. Pneumatique (1) selon la revendication 11, **caractérisé en ce que** la largeur mesurée au fond de ladite au moins une découpure d'orientation transversale (10) est inférieure à 10 mm.

13. Pneumatique (1) selon l'une des revendications précédentes, **caractérisé en ce que** la couche d'éléments de renforcement circonférentiels (42) est radialement disposée entre deux couches de sommet de travail (41, 43).

14. Pneumatique (1) selon l'une des revendications précédentes, **caractérisé en ce que** l'armature de sommet (4) est formée d'au moins deux couches de sommet de travail d'éléments de renforcement (41, 43), de préférence inextensibles, croisés d'une couche à l'autre en faisant avec la direction circonférentielle des angles compris entre 10° et 45°.

15. Pneumatique (1) selon l'une des revendications précédentes, **caractérisé en ce que** les éléments de renforcement d'au moins une couche d'éléments de renforcement circonférentiels (42) sont des éléments de renforcement métalliques présentant un module sécant à 0,7 % d'allongement compris entre 10 et 120 GPa et un module tangent maximum inférieur à 150 GPa, la mesure du module sécant et du module tangent étant effectuée en traction selon la norme ISO 6892 de 1984.

## Patentansprüche

1. Reifen (1) mit radialer Karkassenbewehrung (2), umfassend eine Scheitelbewehrung (4), die aus zumindest zwei Arbeitsscheitelschichten von Verstärkungselementen (41, 43) ausgebildet ist, wobei zwischen zumindest den Enden der zumindest zwei Arbeitsscheitelschichten (41, 43) eine Schicht (C) aus Kautschukmischung angeordnet ist, wobei die Scheitelbewehrung radial von einem Laufstreifen (5) bedeckt ist, wobei der Laufstreifen über zwei Seitenwände mit zwei Wülsten verbunden ist, wobei die Scheitelbewehrung (4) zumindest eine Schicht von Umfangsverstärkungselementen (42) aufweist, wobei der Laufstreifen eine Lauffläche (6) aufweist, die dazu bestimmt ist, mit einer Fahrbahn in Kontakt zu kommen und eine Kontaktfläche auszubilden, wobei der Elastizitätsmodul unter Spannung bei 10 % Dehnung der Schicht (C) aus Kautschukmischung größer als 9 MPa ist, wobei die Messung des Elastizitätsmoduls unter Zug nach der Norm AFNOR-NFT-46002 vom September 1988 unter den Standardtemperatur- und Standardfeuchtigkeitsbedingungen nach der Norm AFNOR-NFT-40101 vom Dezember 1979 erfolgt, wobei der maximale Wert von tan(δ), mit tan(δ)max bezeichnet, der Schicht (C) aus Kautschukmischung kleiner als 0,100 ist, wobei der Verlustfaktor tan(δ) nach der Norm ASTM D 5992-96 gemessen wird,
**dadurch gekennzeichnet, dass** der Laufstreifen (5) aus zumindest einem mittleren Teil, der sich zumindest in dem Bereich der Äquatorialebene erstreckt, und zwei axial äußeren Teilen gebildet ist und zumindest im mittleren Teil zumindest einen schräg ausgerichteten Ausschnitt (7) aufweist, wobei ein schräg ausgerichteter Ausschnitt ein Ausschnitt ist, dessen mittlere Ebene zumindest eines Teils der Wände des Ausschnitts mit der radialen Ebene einen Winkel zwischen 35° und 80° ausbildet, dadurch, dass die an einem neuen Reifen in zumindest dem mittleren Teil gemessene Tiefe des zumindest einen schräg ausgerichteten Ausschnitts (7) größer als oder gleich 40 % der Dicke des Laufstreifens ist, und
dadurch, dass das Verhältnis der am Boden des zumindest einen schräg ausgerichteten Ausschnitts (7) gemessenen Breite (D_{f}) zu der an der Oberfläche des Laufstreifens eines neuen Reifens gemessenen Breite (dₛ) des zumindest einen schräg ausgerichteten Ausschnitts (7) größer als 1,2 ist.

2. Reifen (1) nach Anspruch 1, **dadurch gekennzeichnet, dass** die am Boden des zumindest einen schräg ausgerichteten Ausschnitts (7) gemessene Breite (D_{f}) streng größer als 3 mm ist.

3. Reifen (1) nach Anspruch 2, **dadurch gekennzeichnet, dass** die am Boden des zumindest einen schräg ausgerichteten Ausschnitts (7) gemessene Breite (D_{f}) kleiner als 10 mm ist.

4. Reifen (1) nach einem der vorangehenden Ansprüche, **dadurch gekennzeichnet, dass** die Schicht (C) aus Kautschukmischung eine Elastomermischung ist, basierend auf Naturkautschuk oder synthetischem Polyisopren mit einer Mehrheit von cis-1,4-Verkettungen und eventuell zumindest einem anderen Dienelastomer, wobei der Naturkautschuk bzw. das synthetische Polyisopren im Falle eines Verschnitts in einem mehrheitlichen Anteil vorhanden ist, bezogen auf den Anteil des anderen bzw. der anderen verwendeten Dienelastomere, sowie einem verstärkenden Füllstoff, der gebildet ist aus:
a) Ruß mit einer spezifischen BET-Oberfläche von weniger als 60 m²/g, gleichgültig, welchen Strukturindex er hat, verwendet in einem Anteil zwischen 40 und 100 pce und vorzugsweise zwischen 60 und 90 pce, oder
b) einem hellen Füllstoff vom Typ Kieselsäure und/oder Aluminiumoxid, der SiOH- und/oder AlOH-Oberflächenfunktionen aufweist, ausgewählt aus der Gruppe, umfassend die gefällten oder pyrogenen Kieselsäuren, die Aluminiumoxide oder die Aluminosilikate oder auch die während oder nach der Synthese modifizierten Ruße mit einer spezifischen BET-Oberfläche zwischen 30 bis 260 m²/g, verwendet in einem Anteil zwischen 40 und 100 pce und vorzugsweise zwischen 60 und 90 pce, oder
c) einem Verschnitt von unter (a) beschriebenem Ruß und einem unter (b) beschriebenen hellen Füllstoff, wobei der Gesamtanteil an Füllstoff zwischen 40 und 100 pce und vorzugsweise zwischen 60 und 90 pce beträgt,
wobei die Messung der spezifischen BET-Oberfläche nach der Methode von BRUNAUER, EMMET und TELLER erfolgt, die in "The Journal of the American Chemical Society", Band 60, Seite 309, Februar 1938, beschrieben ist und der Norm NFT 45007 vom November 1987 entspricht.

5. Reifen (1) nach einem der vorangehenden Ansprüche, wobei die zumindest zwei Arbeitsscheitelschichten (41, 43) jeweils aus Verstärkungselementen ausgebildet sind, die zwischen zwei Kalandrierschichten aus Kautschukmischung eingefügt sind,
**dadurch gekennzeichnet, dass** der Elastizitätsmodul unter Spannung bei 10 % Dehnung zumindest einer Kalandrierschicht zumindest einer Arbeitsscheitelschicht (41, 43) größer als 9 MPa ist, und dadurch, dass der maximale Wert von tan(δ), mit tan(δ)max bezeichnet, der zumindest einen Kalandrierschicht zumindest einer Arbeitsscheitelschicht (41, 43) kleiner als 0,100 ist.

6. Reifen (1) nach Anspruch 5, **dadurch gekennzeichnet, dass** die zumindest eine Kalandrierschicht zumindest einer Arbeitsscheitelschicht (41, 43) eine Elastomermischung ist, basierend auf Naturkautschuk oder synthetischem Polyisopren mit einer Mehrheit von cis-1,4-Verkettungen und eventuell zumindest einem Dienelastomer, wobei der Naturkautschuk bzw. das synthetische Polyisopren im Falle eines Verschnitts in einem mehrheitlichen Anteil vorhanden ist, bezogen auf den Anteil des anderen bzw. der anderen verwendeten Dienelastomere, sowie einem verstärkenden Füllstoff, der gebildet ist aus:
a) Ruß mit einer spezifischen BET-Oberfläche von weniger als 60 m²/g, gleichgültig, welchen Strukturindex er hat, verwendet in einem Anteil zwischen 40 und 100 pce und vorzugsweise zwischen 60 und 90 pce, oder
b) einem hellen Füllstoff vom Typ Kieselsäure und/oder Aluminiumoxid, der SiOH- und/oder AlOH-Oberflächenfunktionen aufweist, ausgewählt aus der Gruppe, umfassend die gefällten oder pyrogenen Kieselsäuren, die Aluminiumoxide oder die Aluminosilikate oder auch die während oder nach der Synthese modifizierten Ruße mit einer spezifischen BET-Oberfläche zwischen 30 bis 260 m²/g, verwendet in einem Anteil zwischen 40 und 100 pce und vorzugsweise zwischen 60 und 90 pce, oder
c) einem Verschnitt von unter (a) beschriebenem Ruß und einem unter (b) beschriebenen hellen Füllstoff, wobei der Gesamtanteil an Füllstoff zwischen 40 und 100 pce und vorzugsweise zwischen 60 und 90 pce beträgt,
wobei die Messung der spezifischen BET-Oberfläche nach der Methode von BRUNAUER, EMMET und TELLER erfolgt, die in "The Journal of the American Chemical Society", Band 60, Seite 309, Februar 1938, beschrieben ist und der Norm NFT 45007 vom November 1987 entspricht.

7. Reifen (1) nach einem der vorangehenden Ansprüche, der zumindest im mittleren Teil zumindest einen längsgerichteten Ausschnitt (8) aufweist,
**dadurch gekennzeichnet, dass** die an einem neuen Reifen in zumindest dem mittleren Teil gemessene Tiefe des zumindest einen längsgerichteten Ausschnitts (8) größer als oder gleich 40 % der Dicke des Laufstreifens ist, und dadurch, dass das Verhältnis der am Boden des zumindest einen längsgerichteten Ausschnitts (8) gemessenen Breite zu der an der Oberfläche des Laufstreifens eines neuen Reifens gemessenen Breite des zumindest einen längsgerichteten Ausschnitts (8) größer als 1,2 ist,

8. Reifen (1) nach Anspruch 7, **dadurch gekennzeichnet, dass** die am Boden des zumindest einen längsgerichteten Ausschnitts (8) gemessene Breite streng größer als 3 mm ist.

9. Reifen (1) nach Anspruch 8, **dadurch gekennzeichnet, dass** die am Boden des zumindest einen längsgerichteten Ausschnitts (8) gemessene Breite kleiner als 10 mm ist.

10. Reifen (1) nach einem der vorangehenden Ansprüche, der zumindest im mittleren Teil zumindest einen quergerichteten Ausschnitt (10) aufweist,
**dadurch gekennzeichnet, dass** die an einem neuen Reifen in zumindest dem mittleren Teil gemessene Tiefe des zumindest einen quergerichteten Ausschnitts (10) größer als oder gleich 40 % der Dicke des Laufstreifens ist, und dadurch, dass das Verhältnis der am Boden des zumindest einen quergerichteten Ausschnitts (10) gemessenen Breite zu der an der Oberfläche des Laufstreifens eines neuen Reifens gemessenen Breite des zumindest einen quergerichteten Ausschnitts (10) größer als 1,2 ist,

11. Reifen (1) nach Anspruch 10, **dadurch gekennzeichnet, dass** die am Boden des zumindest einen quergerichteten Ausschnitts (10) gemessene Breite streng größer als 2 mm ist.

12. Reifen (1) nach Anspruch 11, **dadurch gekennzeichnet, dass** die am Boden des zumindest einen quergerichteten Ausschnitts (10) gemessene Breite kleiner als 10 mm ist.

13. Reifen (1) nach einem der vorangehenden Ansprüche, **dadurch gekennzeichnet, dass** die Schicht von Umfangsverstärkungselementen (42) radial zwischen zwei Arbeitsscheitelschichten (41, 43) angeordnet ist.

14. Reifen (1) nach einem der vorangehenden Ansprüche, **dadurch gekennzeichnet, dass** die Scheitelbewehrung (4) aus zumindest zwei Arbeitsscheitelschichten von vorzugsweise undehnbaren Verstärkungselementen (41, 43) ausgebildet ist, die sich von einer Schicht zur anderen überkreuzen und dabei mit der Umfangsrichtung Winkel zwischen 10° und 45° ausbilden.

15. Reifen (1) nach einem der vorangehenden Ansprüche, **dadurch gekennzeichnet, dass** die Verstärkungselemente zumindest einer Schicht von Umfangsverstärkungselementen (42) metallische Verstärkungselemente sind, die einen Sekantenmodul bei 0,7 % Dehnung zwischen 10 und 120 GPa und einen maximalen Tangentenmodul von weniger als 150 GPa aufweisen, wobei die Messung des Sekantenmoduls und des Tangentenmoduls unter Zug nach der Norm ISO 6892 von 1984 erfolgt.

## Claims

1. Tyre (1) having a radial carcass reinforcement (2) comprising a crown reinforcement (4) formed of at least two working crown layers of reinforcing elements (41, 43), a layer (C) of rubber compound being arranged between at least the ends of said at least two working crown layers (41, 43), said crown reinforcement being capped radially with a tread (5), said tread being joined to two beads via two sidewalls, the crown reinforcement (4) comprising at least one layer of circumferential reinforcing elements (42), said tread comprising a tread surface (6) intended to come into contact with a road surface and form a contact surface, the tensile modulus of elasticity at 10% elongation of the layer (C) being greater than 9 MPa, the measurement of said modulus being performed under tension according to standard AFNOR-NFT-46002 of September 1988 in normal temperature and relative humidity conditions according to standard AFNOR-NFT-40101 of December 1979, the maximum value of tan(δ), denoted tan(δ)ₘₐₓ, of the layer (C) being less than 0.100, the measurement of tan(δ) being performed according to Standard ASTM D 5992-96, **characterized in that** said tread (5) consists of at least one central part extending at least in the region of the equatorial plane and two axially exterior parts and has, at least in said central part, at least one obliquely-oriented cut (7), **in that** the depth, measured on a new tyre in at least said central part, of said at least one obliquely-oriented cut (7) is greater than or equal to 40% of the thickness of the tread, and **in that** the ratio of the width (D_{f}) measured at the bottom of said at least one obliquely-oriented cut (7) to the width (d_{S}) measured at the surface of the tread on a new tyre of said at least one obliquely-oriented cut (7) is greater than 1.2.

2. Tyre (1) according to Claim 1, **characterized in that** the width (D_{f}) measured at the bottom of said at least one obliquely-oriented cut (7) is strictly greater than 3 mm.

3. Tyre (1) according to Claim 2, **characterized in that** the width (D_{f}) measured at the bottom of said at least one obliquely-oriented cut (7) is less than 10 mm.

4. Tyre (1) according to one of the preceding claims, **characterized in that** the layer (C) of rubber compound is an elastomer compound based on natural rubber or on synthetic polyisoprene with a predominance of cis-1,4- linkages and optionally on at least one other diene elastomer, the natural rubber or synthetic polyisoprene in the case of a blend being present at a predominant content relative to the content of the other diene elastomer(s) used and on a reinforcing filler composed:
a) either of carbon black with a BET specific surface area less than 60 m²/g, regardless of its oil absorption number, used at a content of between 40 and 100 phr, and preferably between 60 and 90 phr,
b) or of a white filler of the silica and/or alumina type comprising SiOH and/or AlOH surface functions selected from the group formed of precipitated or fumed silicas, aluminas or aluminosilicates or else carbon blacks modified during or after synthesis with a BET specific surface area of between 30 and 260 m²/g used at a content of between 40 and 100 phr and preferably between 60 and 90 phr,
c) or of a blend of carbon black described in (a) and a white filler described in (b), wherein the overall filler content is between 40 and 100 phr, and preferably between 60 and 90 phr,
the BET specific surface area measurement being performed in accordance with the Brunauer, Emmet and Teller method described in "The Journal of the American Chemical Society)), vol. 60, page 309, February 1938, corresponding to the standard NFT 45007 of November 1987.

5. Tyre (1) according to one of the preceding claims, said at least two working crown layers (41, 43) each being formed of reinforcing elements inserted between two calendering layers of rubber compound, **characterized in that** the tensile modulus of elasticity at 10% elongation of at least one calendering layer of at least one working crown layer (41, 43) is greater than 9 MPa and **in that** the maximum value of tan(δ), denoted tan(δ)max, of said at least one calendering layer of at least one working crown layer (41, 43) is less than 0.100.

6. Tyre (1) according to Claim 5, **characterized in that** said at least one calendering layer of at least one working crown layer (41, 43) is an elastomer compound based on natural rubber or on synthetic polyisoprene with a predominance of cis-1,4- linkages and optionally on at least one other diene elastomer, the natural rubber or synthetic polyisoprene in the case of a blend being present at a predominant content relative to the content of the other diene elastomer(s) used and on a reinforcing filler composed:
a) either of carbon black with a BET specific surface area less than 60 m²/g, regardless of its oil absorption number, used at a content of between 40 and 100 phr, and preferably between 60 and 90 phr,
b) or of a white filler of the silica and/or alumina type comprising SiOH and/or AlOH surface functions selected from the group formed of precipitated or fumed silicas, aluminas or aluminosilicates or else carbon blacks modified during or after synthesis with a BET specific surface area of between 30 and 260 m²/g used at a content of between 40 and 100 phr and preferably between 60 and 90 phr,
**c)** or of a blend of carbon black described in (a) and a white filler described in (b), wherein the overall filler content is between 40 and 100 phr, and preferably between 60 and 90 phr,
the BET specific surface area measurement being performed in accordance with the Brunauer, Emmet and Teller method described in "The Journal of the American Chemical Society», vol. 60, page 309, February 1938, corresponding to the standard NFT 45007 of November 1987.

7. Tyre (1) according to one of the preceding claims, having, at least in said central part, at least one longitudinally-oriented cut (8), **characterized in that** the depth, measured on a new tyre in at least said central part, of said at least one longitudinally-oriented cut (8) is greater than or equal to 40% of the thickness of the tread, **in that** the ratio of the width measured at the bottom of said at least one longitudinally-oriented cut (8) to the width measured at the surface of the tread on a new tyre of said at least one longitudinally-oriented cut is greater than 1.2.

8. Tyre (1) according to Claim 7, **characterized in that** the width measured at the bottom of said at least one longitudinally-oriented cut (8) is strictly greater than 3 mm.

9. Tyre (1) according to Claim 8, **characterized in that** the width measured at the bottom of said at least one longitudinally-oriented cut (8) is less than 10 mm.

10. Tyre (1) according to one of the preceding claims, having, at least in said central, part at least one transversely-oriented cut (10), **characterized in that** the depth, measured on a new tyre in at least said central part, of said at least one transversely-oriented cut (10) is greater than or equal to 40% of the thickness of the tread, and **in that** the ratio of the width measured at the bottom of said at least one transversely-oriented cut (10) to the width measured at the surface of the tread on a new tyre of said at least one transversely-oriented cut (10) is greater than 1.2.

11. Tyre (1) according to Claim 10, **characterized in that** the width measured at the bottom of said at least one transversely-oriented cut (10) is strictly greater than 2 mm.

12. Tyre (1) according to Claim 11, **characterized in that** the width measured at the bottom of said at least one transversely-oriented cut (10) is less than 10 mm.

13. Tyre (1) according to one of the preceding claims, **characterized in that** the layer of circumferential reinforcing elements (42) is radially arranged between two working crown layers.

14. Tyre (1) according to one of the preceding claims, **characterized in that** the crown reinforcement (4) is formed of at least two working crown layers of reinforcing elements (41, 43), preferably inextensible, crossed from one layer to the other, forming, with the circumferential direction, angles of between 10° and 45°.

15. Tyre (1) according to one of the preceding claims, **characterized in that** the reinforcing elements of at least one layer of circumferential reinforcing elements (42) are metal reinforcing elements having a secant modulus at 0.7% elongation of between 10 and 120 GPa and a maximum tangent modulus of less than 150 GPa, the measurement of secant modulus and tangent modulus being performed under tension according to standard ISO 6892 of 1984.
